# EUROPEAN PATENT SPECIFICATION

(11) **EP 0 923 032 B1**
(45) Date of publication and mention of the grant of the patent: **19.03.2003**
(21) Application number: 97830656.1
(22) Date of filing: 11.12.1997
(51) Int. Cl.: G06F 13/00

(54) **Method for transferring data in a multiprocessor computer system with crossbar interconnecting unit**
Methode um Daten in einem Multiprozessorrechner über einen Crossbarschalter zu übertragen
Méthode de transfert de données dans un système d'ordinateur multiprocesseurs interconnectés par un switch crossbar

(43) Date of publication of application: 16.06.1999
(73) Proprietor: BULL S.A., 78434 Louveciennes Cedex (FR)
(72) Inventor: Zulian, Ferruccio, 20010 Cornaredo (Milano) (IT); Grassi, Antonio, 22060 Carimate (Como) (IT)
(74) Representative: Pezzoli, Ennio

(56) References cited:
- EP-A- 0 510 821
- EP-A- 0 608 663
- WO-A-87/05418
- JAMES O. NICHOLSON: "The RISC System/6000 SMP System" 1995 IEEE, 5 March 1995, pages 102-109, XP000545420

## Description

The present invention relates to a method for transferring data in a multiprocessor computer system, and particularly to a method according to the precharacterizing clause of the first claim.

Multiprocessor computer systems, in which a plurality of processors execute different operations simultaneously using a shared memory, are widely used to obtain high operating performance. A particular type of multiprocessor computer system, described for example in EP-A-0608663, comprises a multi-point communication channel, or bus, for the transfer of addresses to which the processors and the shared memory are connected in parallel; each processor and the shared memory are connected selectively in pairs for the transfer of data through point-to-point communication channels connected to a crossbar interconnecting unit, controlled by a suitable control unit; typically, the interconnecting unit is provided with input and output buffer memories, each of which is connected to a corresponding data channel.

In general, each processor includes a memory of the cache type (very fast but with a limited capacity), which stores data corresponding to those stored in the (relatively slow) shared memory, in such a way as to reduce statistically the number of accesses to the shared memory (and therefore also to the address bus).

When a processor requests the reading of a data element from the shared memory, this processor (after obtaining access to the address bus) sends the address of the requested data along the bus. To ensure the consistency of the data of the shared memory replicated in the cache memories, the processors continuously observe (by a process known as snooping) the read requests, to check whether the requested data element is present in their cache memory. If the requested data element is present in a processor in a form which is modified with respect to the (no longer valid) value present in the shared memory, this processor intervenes by directly supplying the data element to the requesting processor. When the requested data element is available in the output buffer of the interconnecting unit corresponding to the data channel of the requesting processor, the control unit of the interconnecting unit requests access to this data channel for transferring the data element to the requesting processor.

The inventors have realized that the known data transfer method described above does not allow the resources of the computer system to be exploited in an optimal way; in particular, it has a duration which is not negligible and has a negative effect on the performance of the whole computer system.

The object of the present invention is to overcome the above drawbacks.To achieve this object a method for transferring data as described in the first claim is proposed.

Further characteristics and the advantages of the method for transferring data according to the present invention will be made clear by the following description of a preferred embodiment thereof, provided for information only and without restriction, with reference to the attached figures, in:
Fig. 1 is a block diagram of a computer system in which the method according to the present invention can be used;
Fig. 2 represents in schematic form the signals exchanged with the arbitration unit shown in Fig. 1;
Fig. 3 illustrates in a timing diagram a known method for transferring data in the computer system shown in Fig. 1;
Figs. 4a and 4b represent in timing diagrams different examples of the method of transferring data according to the present invention.

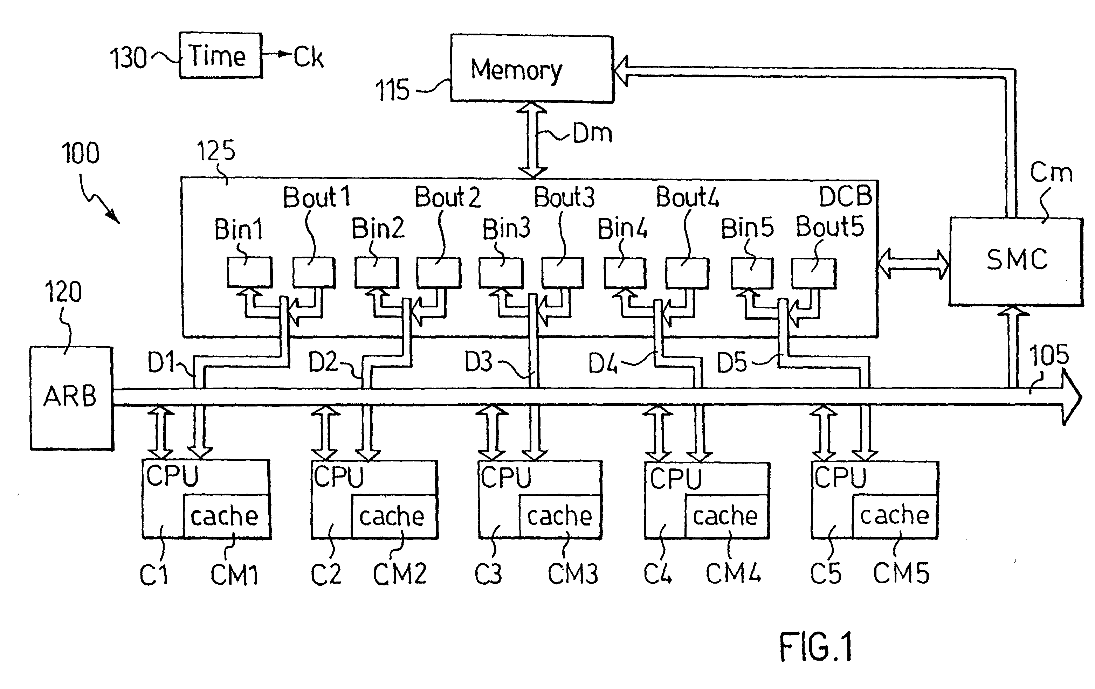

With reference to Fig. 1 in particular, a multiprocessor computer system 100 is illustrated, comprising an address bus 105 (of the 64-bit type for example) to which are connected in parallel a plurality of processors C1, C2, C3, C4 and C5 (five in the example shown) which operate in what is known as "master" mode with the function of controlling access (with reciprocal exclusion) to the address bus 105; typically, the processors C1-C5 consist of central processing units (CPU), or alternatively input/output controllers, interface units (bridges) for connection to a group (cluster) of processors, and similar. Each processor C1, C2, C3, C4 and C5 (or only one or more of them) is provided with a cache memory, identified as CM1, CM2, CM3, CM4 and CM5 respectively. A shared memory 115, typically consisting of a plurality of modules is also connected, through a control unit (System Memory Control, or SMC) Cm, to the address bus 105. A value (ADD) indicating an address of a data element (of the shared memory, of an internal register of a processor, of a remote memory of a cluster of processors, and similar) and the type of operation requested (reading or writing) is transmitted along the address bus 105; typically, the data are not controlled in an ordered flow and may be supplied to a requesting processor in any sequence (Out of Order), and consequently the ADD value also includes a tag (TAG) which identifies the requesting processor and the transaction relating to it. The processors C1-C5 and the memory control unit Cm are connected simultaneously to the address bus 105 to receive the value transmitted along it; the access of the processors C1-C5 with reciprocal exclusion to the address bus 105 for sending a particular value along it is controlled by an arbitration unit (ARB) 120.

Each processor C1, C2, C3, C4, C5 and the shared memory 115 are connected through a data communication channel D1, D2, D3, D4, D5 and Dm respectively to a crossbar interconnecting unit (Data CrossBar, or DCB) 125; the interconnecting unit 125 is provided with input buffers Bin1, Bin2, Bin3, Bin4, Bin5 and with output buffers Bout1, Bout2, Bout3, Bout4, Bout5, each of which is connected to a corresponding data channel D1, D2, D3, D4, D5 respectively. The interconnecting unit 125 selectively connects a processor C1-C5 to the shared memory 115, or to another processor C1-C5, in response to suitable instruction signals supplied by the memory control unit Cm; it should be noted that it is possible to activate a plurality of connections simultaneously without any interference. A data element and the corresponding identifying tag are transmitted along each data channel D1-D5 and Dm. The data channels D1-D5 have a capacity of 64 bits, for example, while the data channel Dm preferably has a multiple capacity, of 256 bits for example; in this case, the transfer of data between the shared memory 115 and the interconnecting unit 125 takes place simultaneously in two 256-bit blocks (512 bit), while the transfer of data between the interconnecting unit 125 and the processors C1-C5 takes place by serialization of the operation into a plurality of successive stages (8 in the example in question) during each of which one 64-bit block is transferred. The corresponding processor C1-C5 and the interconnecting unit 125 are connected simultaneously to each data channell D1-D5 to receive the value transmitted along it; the memory control unit Cm is connected to a portion of each data channel D1-D5 to receive only the identifying tags. The arbitration unit (ARB) 120 controls the access to each data channel D1-D5, with reciprocal exclusion, by the corresponding processor C1-C5 and by the interconnecting unit 125 (at the request of the memory control unit Cm). Similar considerations are applicable in the case in which two or more processors are connected directly to each data channel D1-D5. On the contrary, access to the data channel Dm by the interconnecting unit 125 and by the memory 115 is controlled directly by the memory control unit Cm.

A timer unit (TIME) 130 generates a clock signal Ck which is supplied to the processors C1-C5, to the memory control unit Cm, to the shared memory 115, to the arbitration unit 120 and to the interface unit 125 to synchronize the operation of the computer system 100.

The method according to the present invention is, however, also suitable for use in other computer systems, for example those having a different number of processors, with address bus and data channels having different capacities, with two or more interconnecting units connected in parallel, with input buffers only, output buffers only, or no buffers in the interconnecting unit, with a similar input/output buffer connected to the data channel of the shared memory, and in general in any multiprocessor computer system in which one or more processors are connected through a corresponding data channel to equivalent interconnecting means.

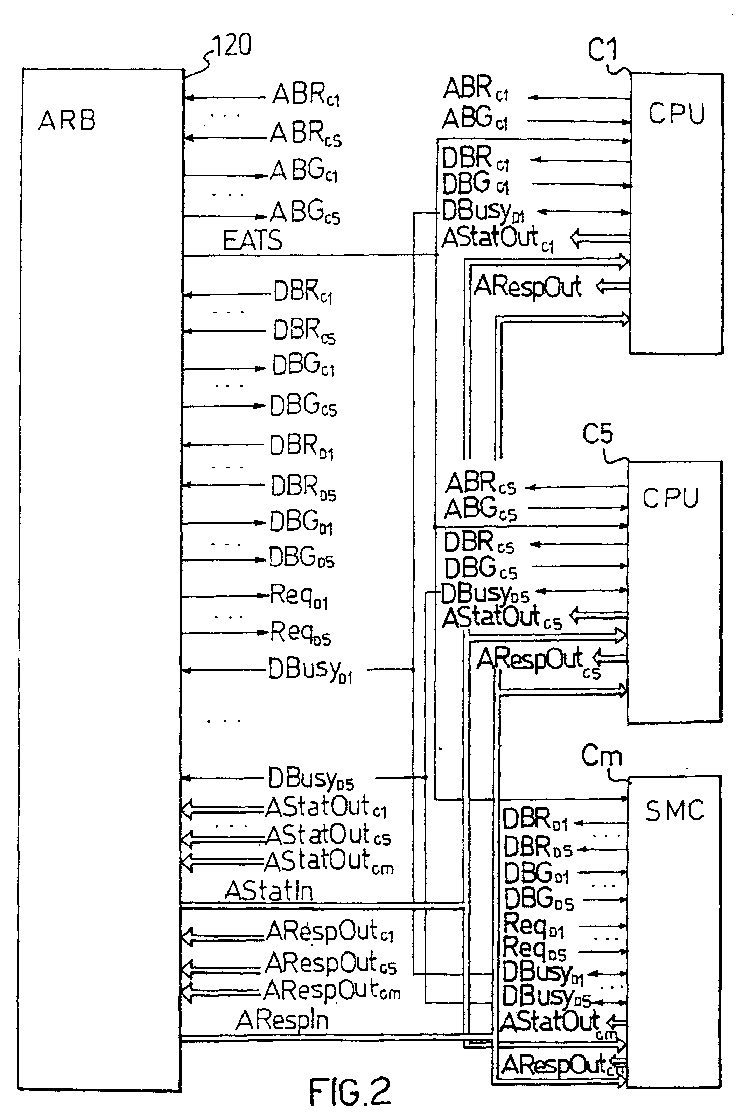

With reference now to Fig. 2 (the elements shown previously in Fig. 1 are indicated by the same reference numbers or symbols), each processor C1-C5 is connected to the arbitration unit 120 through a dedicated point-to-point line for sending a signal requesting access to the address bus (Address Bus Request, or ABRᵢ, where i=C1...C5), and through a further dedicated line for receiving a signal granting access to the address bus (Address Bus Grant, or ABGᵢ). The arbitration unit 120 is connected through a multi-point line to all the agents (processors C1-C5 and memory control unit Cm) for sending a signal indicating the validity of the value present in the address bus (Early Transfer Start, or EATS).

Each processor C1-C5 is connected to the arbitration unit 120 through a dedicated line for sending a signal requesting access to the corresponding data channel (Data Bus Request, or DBRᵢ) and through a further dedicated line for receiving a signal granting access to the data channel (Data Bus Grant, or DBGᵢ). The memory control unit Cm is connected to the arbitration unit 120 through a dedicated line for each data channel for sending along each line a signal requesting access to the corresponding data channel (DBRⱼ, where j=D1...D5) and through a further dedicated line for each data channel for receiving a signal granting access to the data channel (DBGⱼ). The memory control unit Cm is also connected to the arbitration unit 120 through a dedicated line for each data channel for receiving along each line a signal (Reqⱼ) indicating the fact that there are requests for access (from the processor) to the corresponding data channel.

A dedicated line for each data channel is used to transmit a signal indicating the occupation of the corresponding data channel (Dbusyⱼ). The corresponding agents (processor Cᵢ and memory control unit Cm) and the arbitration unit 120 are connected to each of these lines; the Dbusyⱼ signal is sent along the corresponding line by the agent which has obtained access to the data channel and is received simultaneously by the other agents and by the arbitration unit. The duration of the data channel occupation signal is variable as a function of the length of the data transmitted; for example, if the data channel has a capacity of 64 bits, in other words 8 bytes, and the transmitted data element consists of a cache memory line of 64 bytes, the transfer of this data element requires 8 clock periods. It should be noted that a corresponding signal is not used for the address bus, since its occupation has a fixed duration (of 3 clock periods, for example).

The agents C1-C5, Cm are connected through dedicated channels (with a capacity of 2 bits each, for example) to the arbitration unit 120 for sending a signal indicating the state of the transaction (AStatOutₖ, where k=C1...C5, Cm); the arbitration unit 120 is connected through a multi-point channel (with a capacity of 2 bits, for example) to all the agents C1-C5, Cm for sending a signal indicating the collective state of the transaction (AStatIn), which is a function of the value of the various AStatOutₖ signals. In particular, the AStatIn signal takes a first value (AddressParityError) if an agent has detected a parity error in the address, a second value (Retry) if an agent is unable to check a transaction because it has all its resources occupied (so that the transaction has to be cancelled and repeated by the requesting processor), a third value (PositiveAcknowledge) if an agent recognizes that it is the addressee of the transaction, and a fourth value (NoAcknowledge) if no agent recognizes that it is the addressee of the transaction.

Similarly, the agents C1-C5, Cm are connected through dedicated channels (with a capacity of 3 bits each, for example) to the arbitration unit 120 for sending a signal (ARespOutₖ) which indicates the state of the snooping; the arbitration unit 120 is connected through a multi-point channel (with a capacity of 3 bits, for example) to all the agents C1-C5, Cm for sending a signal indicating the collective state of the snooping (ARespIn), which is a function of the value of the various ARespOutₖ signals. In particular, the signal ARespIn takes a first value (Retry) if the transaction has to be cancelled for any reason (for example because some resources are not available) and then repeated by the requesting processor, a second value (Modify) if a processor has in its cache memory the requested data element in a form modified with respect to the (no longer valid) value present in the shared memory, a third value (ReRun) if the transaction has to be cancelled and suspended for subsequent reactivation (to prevent continual repetitions of the transaction), and a fourth value (Null) if no processor has the requested data element in its cache memory.

The present invention is, however, also capable of being applied with equivalent arbitration units which use other types of signals, different connections to the other units of the computer system, with a fixed duration of occupation of each data channel, and similar.

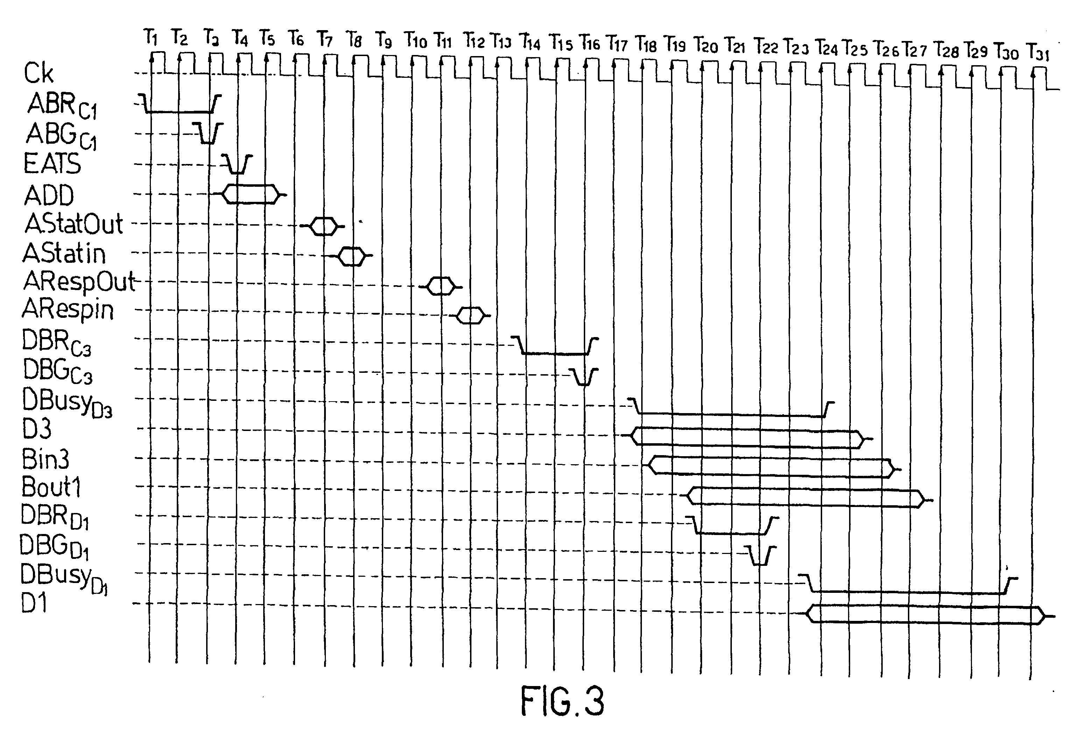

An known example of data transfer used in the computer system described above is illustrated by the timing diagram in Fig. 3; as usual, the various signals are set/reset, in other words take a low/high value (or vice versa) for a time interval having a duration equal to the period of the clock signal Ck (or a multiple of this period), and each rising edge of the clock signal Ck defines the instant at which the state of the signals is stable and can be recognized (strobed).

It is assumed that at the instant T1 a generic processor (for example the processor indicated by C1 in Fig. 1) requests access to the address bus (by setting the signal ABR_{C1}) for reading a data element from the shared memory; the signal ABR_{C1} is kept set up to an instant, for example T3, at which the arbitration logic grants access to the address bus (by setting the signal ABG_{C1}). The arbitration unit sets the signal EATS at the instant T4 to signal to all the agents that the value present in the address bus at the next instant is valid. Simultaneously, the processor C1 accesses the address bus by sending along it the value ADD (address of requested data element and corresponding identifying tag).

The value ADD present in the address bus is received at the instant T5 by all the agents, each of which generates a corresponding transaction state signal at the instant T7 (represented in the figure in cumulative form by a single signal AStatOut). At the instant T8, the collective transaction state signal AStatIn is produced by the arbitration unit. Each agent then generates at the instant T11 a corresponding snooping state signal (represented in the figure in cumulative form by a single signal ARespOut). At the instant T12, the collective snooping state signal ARespIn is produced by the arbitration unit.

We shall now consider the case in which the requested data element is present in the cache memory of an intervening processor (for example the processor indicated by C3 in Fig. 1) in modified form (ARespIn=Modify). In this situation, the intervening processor C3 requests access to the corresponding data channel (indicated by D3 in Fig. 1) for transferring the modified data element to the interconnecting unit. In particular, at an instant T14 (generally following the instant T12) the intervening processor C3 sets the signal DBR_{C3}; the arbitration unit grants access to the data channel D3 to the intervening processor C3 at a subsequent instant, for example T16 (setting the signal DBG_{C3}). At the instant T18, the intervening processor C3 occupies the data channel D3 (setting the signal Dbusy_{D3}) and sends the modified data element; the transfer operation requires, for example, 8 clock periods, and therefore the Dbusy_{D3} signal is reset after the instant T24 and the transfer of the modified data element terminates at the instant T25. Simultaneously, the memory control unit receives from the data channel D3 the identifying tag associated with the transferred data element (indicating the requesting processor C1). The modified data element is loaded into the input buffer of the interconnecting unit corresponding to the data channel D3 (indicated by Bin3 in Fig. 1) after one clock period, in other words from the instant T19 to the instant T26. At the next instant T20 the memory control unit (according to the value of the identifying tag received previously) connects the input buffer Bin3 to the output buffer (indicated by Bout1 in Fig. 1) corresponding to the data channel D1 for transferring the modified data element (from the instant T20 to the instant T27).

Simultaneously, the memory control unit requests access to the data channel D1, setting the signal DBR_{D1}. The arbitration unit grants the memory control unit access to the data channel D1 at a subsequent instant, for example T22 (setting the signal DBG_{D1}). At the instant T24, the memory control unit occupies the data channel D1 (setting the signal Dbusy_{D1}) for transferring the modified data element to the requesting processor C1. The Dbusy_{D1} signal is then reset at the instant T30 and the transfer of the modified data element terminates at the instant T31.

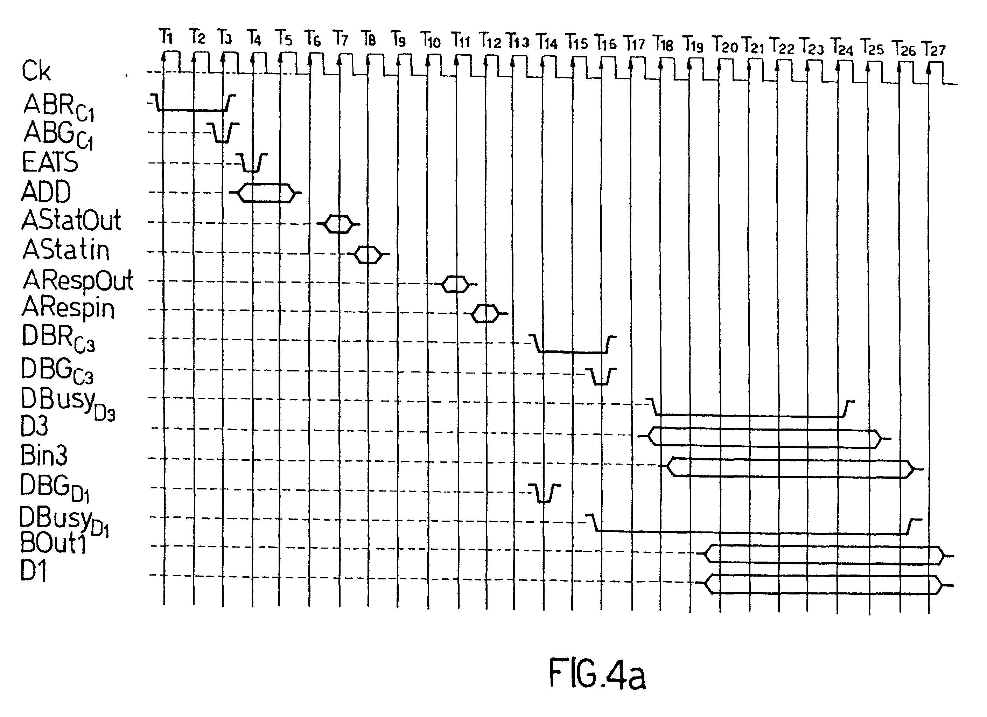

With reference now to Fig. 4a, an example of data transfer according to the present invention is illustrated. The stages up to the loading of the modified data element into the input buffer Bin3 are identical to those described above; the present invention, however, is also suitable for application with equivalent timing systems capable of providing, in general, the steps of requesting the reading of the data element from the shared memory and, if the requested data element is present in modified form in the cache memory of the intervening processor, transferring the modified data element from the intervening processor to the interconnecting unit (and then to the requesting processor).

In the method according to the present invention, the arbitration unit grants the memory control unit (and consequently the interconnecting unit) access to the data channel D1, setting the signal DBG_{D1}, before the modified data element is available in the interconnecting unit (particularly in the input buffer Bin3). Preferably, the signal DBG_{D1} is set immediately after the instant (T11) in which the arbitration unit receives from the intervening processor C3 the signal ARespOut_{C3} indicating that the requested data element is present in its cache memory in modified form, at the instant T14 for example. In a particularly advantageous embodiment of the present invention, the arbitration unit grants the memory control unit access to the data channel D1 only if there are no other requests (from the corresponding processor C1) for access to the same data channel. In this case, the other access requests are satisfied first, after which the arbitration unit grants the memory control unit access to the data channel D1, in such a way as to avoid the unnecessary blocking of other transactions.

At the instant T16, the memory control unit occupies the data channel D1, setting the signal Dbusy_{D1}. As soon as the modified data element is available in the input buffer Bin3 (instant T19), the memory control unit connects the input buffer Bin3 to the output buffer Bout1. The data element is transferred at the following instant T20 to the output buffer Bout1 and to the data channel D1. Preferably, the transfer from the input buffer Bin3 to the data channel D1 is immediate, since it is not necessary to store the data element in the output buffer Bout1 (since access to the data channel D1 has already been granted); in this way, the output buffer Boutl is transparent and operates solely as a driver circuit of the data channel D1. The Dbusy_{D1} signal is then reset at the instant T26 and the transfer of the modified data element terminates at the instant T27.

The method described above reduces the duration of the data transfer operation. In particular, this solution makes it unnecessary for the memory control unit to request access to the data channel D1; additionally, in this way there is a saving of the time required to transfer the modified data element to the output buffer Bout1 and to grant to the memory control unit access to the data channel D1. The example of embodiment illustrated in Fig. 4a provides, in particular, a reduction of 4 clock periods by comparison with the known method illustrated in Fig. 3; in general, the method according to the present invention provides a time saving of the order of 20% over the whole operation of transferring the modified data element from the intervening processor to the requesting processor.

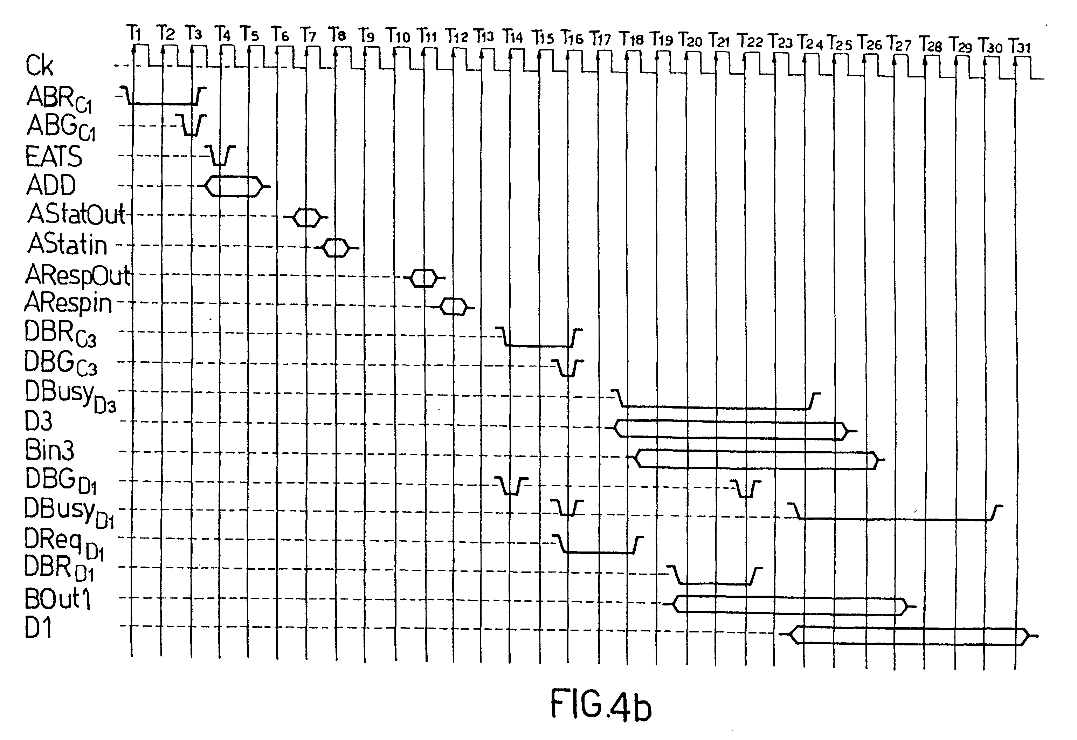

Preferably, the granting of access to the data channel D1 to the memory control unit is not unconditional. In particular, the signal DBG_{D1} is not kept set by the arbitration unit, but is stored within the memory control unit (to be cancelled at the end of the operation of transferring the modified data element). If a different request for access to the data channel D1 (from the corresponding processor C1) is received before the completion of the operation of transferring the modified data element (at the instant T16 for example), the arbitration unit notifies this request to the memory control unit (by setting the signal Req_{D1}), as illustrated in Fig. 4b. The memory control unit then decides, according to the state of the transfer operation, whether to maintain the access to the data channel D1 (for example because the operation is about to be concluded) or to free access to it. In the latter case, the memory control unit frees the data channel D1 by resetting the DBusy_{D1} signal (at the instant T17). When the Req₁ signal is reset, since there are no other requests for access to the data channel D1 (at the instant T19 for example), the memory control unit again requests access to the data channel D1, setting the signal DBR_{D1} at the next instant T20. The arbitration unit grants the memory control unit access to the data channel D1 at a subsequent instant, for example T22 (by setting the signal DBG_{D1} again). At the instant T24, the memory control unit occupies the data channel D1 (by setting the Dbusy_{D1} signal again) to transfer the modified data element, as soon as it is available, to the requesting processor C1. In the case shown in the figure, in which the loading of the modified data element into the input buffer Bin3 has already commenced (instant T19), the modified data element is preferably transferred into the output buffer Bout1 (from the instant T20 to the instant T27), in such a way that the input buffer Bin3 is freed for other data. The modified data element is then transferred to the data channel D1 at the instant T24; the Dbusy_{D1} signal is therefore reset at the instant T30 and the transfer of the modified data element terminates at the instant T31.

Evidently, those skilled in the art may make numerous modifications and changes to the method for transferring data described above, in order to meet contingent and specific requirements; all such modifications are contained within the scope of protection of the invention as defined by the following claims.

## Claims

1. Method (T1-T27) for transferring data in a computer system (100) comprising a plurality of processors (C1-C5) and a shared memory (115), at least one of the processors (C1-C5) having a cache memory (CM1-CM5) for storing corresponding data of the shared memory (115), a plurality of data channels (D1-D5) to each of which at least one of said processors (C1-C5) is connected, and interconnecting means (125, Cm) for selectively interconnecting the data channels (D1-D5), the method comprising the steps of:
a) requesting (T1-T5) the reading of a data element from the shared memory (115) by a requesting processor (C1),
b) in the case (T5-T12) in which the requested data element is present in modified form in the cache memory (CM3) of an intervening processor (C3), transferring (T14-T26) the modified data element from the intervening processor (C3) to the interconnecting means (125, Cm) and subsequently (T20-T27) to the requesting processor (C1),
**characterized by** the step of
c) granting (T14) to the interconnecting means (125, Cm) access to the data channel (D1) corresponding to the requesting processor (C1) before the modified data element is available (T19) in the interconnecting means (125, Cm).

2. Method (T1-T27) according to Claim 1, in which the computer system (100) includes an address bus (105) to which the processors (C1-C5) are connected, the step (a) comprising the step of
(a1) the sending (T4-T5) to the address bus (105) by the requesting processor (C1) of a value (ADD) containing an address of the requested data element and an identifying tag of the requesting processor (C1),
and the step (b) comprising the steps of
(b1) the monitoring (T5) by each of the said processors (C1-C5) of the content of the address bus (105) to check (T11-T12) whether the requested data element is present in modified form in its cache memory (CM1-CM5),
(b2) the transfer (T14-T25) of the modified data element and the identifying tag from the intervening processor (C3) to the intervening data channel (D3), and
(b3) the receiving (T18-T25) by the interconnecting means (125, Cm) of the identifying tag from the intervening data channel (D3) for interconnecting (T20-T27) the intervening data channel (D3) and the requesting data channel (D1).

3. Method (T1-T27) according to Claim 2, in which the interconnecting means (125, Cm) include a plurality of input buffers (Bin1-Bin5), each connected to a corresponding data channel (D1-D5), the method (T1-T27) further comprising after the step (b3) the step (b4) of transferring (T19-T26) the modified data element from the intervening data channel (D3) to the corresponding input buffer (Bin3).

4. Method (T1-T27) according to Claim 3, further comprising after the step (b4) the step (b5) of transferring (T20-T27) the modified data element directly from the input buffer (Bin3) corresponding to the intervening data channel (D3) to the requesting data channel (D1).

5. Method (T1-T27) according to any of Claims 1 to 4, in which the step (c) includes the step of granting (T14) to the interconnecting means (125, Cm) access to the requesting data channel (D1) immediately after it has been ascertained (T11) that the requested data element is present in modified form in the cache memory (CM3) of the intervening processor (C3).

6. Method (T1-T27) according to any of Claims 1 to 5, in which the step (c) includes the step of granting (T14) to the interconnecting means (125, Cm) access to the requesting data channel (D1) only when there are no other requests for access to the requesting data channel (D1).

7. Method (T1-T31) according to any of Claims 1 to 6, additionally comprising after the step (c) and before the completion of the step (b) the step of:
(d) notifying (T16-T18) to the interconnecting means (125, Cm) the presence of other requests for access to the requesting data channel (D1).

8. Method (T1-T31) according to Claim 7, additionally comprising after the step (d) the steps of:
(e) the freeing (T17) by the interconnecting means (125, Cm) of access to the requesting data channel (D1),
(f) the requesting (T20-T22) by the interconnecting means (125, Cm) of access to the requesting data channel (D1) when (T19) there are no longer other requests for access to the requesting data channel (C1).

9. Method (T1-T27) according to Claim 3 or 4, in which the interconnecting means (125, Cm) include a plurality of output buffers (BOut1-BOut5), each connected to a corresponding data channel (D1-D5), the method additionally comprising after the step (b4) the step (b5') of transferring (T20-T28) the modified data element from the input buffer (Bin3) corresponding to the intervening data channel (D3) to the output buffer (Bout1) corresponding to the requesting data channel (D1) and subsequently (T24-T31) to the requesting data channel (D1).

10. Computer system (100) comprising a plurality of processors (C1-C5) and a shared memory (115), at least one of the processors (C1-C5) having a cache memory (CM1-CM5) for storing corresponding data of the shared memory (115), a plurality of data channels (D1-D5) to each of which is connected at least one of the said processors (C1-C5), interconnecting means (125, Cm) for selectively interconnecting the data channels (D1-D5), control means (120, Cm) which are suitable, in an intervention situation in which a requesting processor (C1) requests the reading of a data element from the shared memory (115) and the requested data element is present in modified form in the cache memory (CM3) of an intervening processor (C3), for transferring the modified data element from the intervening processor (C3) to the interconnecting means (125, Cm) and subsequently to the requesting processor (C1),
**characterized in that**
in the intervention situation the control means (120, Cm) are further suitable for granting (T14) to the interconnecting means (125, Cm) access to the data channel (D1) corresponding to the requesting processor (C1) before the modified data element is available (T19) in the interconnecting means (125, Cm).

## Patentansprüche

1. Verfahren (T1-T27) zum Übertragen von Daten in einem Computersystem (100), das eine Mehrzahl von Prozessoren (C1-C5) und einen gemeinschaftlich verwendeten Speicher (115) aufweist, wobei zumindest einer der Prozessoren (C1-C5) einen Cachespeicher (CM1-CM5) zum Speichern entsprechender Daten des gemeinschaftlich verwendeten Speichers (115), eine Mehrzahl von Datenkanälen (D1-D5), wobei zumindest einer der Prozessoren (C1-C5) mit denselben verbunden ist, und eine Verbindungseinrichtung (125, Cm) zum selektiven Verbinden der Datenkanäle (D1-D5) aufweist, wobei das Verfahren folgende Schritte aufweist:
a) Anfordern (T1-T5) des Lesens eines Datenelements aus dem gemeinschaftlich verwendeten Speicher (115) durch einen anfordernden Prozessor (C1),
b) Übertragen (T14-T26) des modifizierten Datenelements von einem intervenierenden Prozessor (C3) zu der Verbindungseinrichtung (125, Cm) und nachfolgend (T20-T27) an den anfordernden Prozessor (C1), in dem Fall (T5-T12), in dem das angeforderte Datenelemente in modifizierter Form in dem Cachespeicher (CM3) des intervenierenden Prozessors (C3) vorliegt,
**gekennzeichnet durch** folgenden Schritt:
c) Gewähren (T14) eines Zugriffs für die Verbindungseinrichtung (125, Cm) zu dem Datenkanal (D1), der dem anfordernden Prozessor (C1) entspricht, bevor das Datenelement in der Verbindungseinrichtung (125, Cm) verfügbar ist (T19).

2. Verfahren (T1-T27) gemäß Anspruch 1, bei dem das Computersystem (100) einen Adreßbus (105) umfaßt, mit dem die Prozessoren (C1-C5) verbunden sind, wobei der Schritt (a) folgenden Schritt aufweist
(a1) Senden (T4-T5) eines Werts (ADD) zu dem Adreßbus (105) durch den anfordernden Prozessor (C1), wobei der Wert eine Adresse des angeforderten Datenelements und ein identifizierendes Etikett des anfordernden Prozessors (C1) enthält,
und wobei der Schritt (b) folgende Schritte aufweist
(b1) Überwachen (T5) des Inhalts des Adreßbusses (105) durch jeden der Prozessoren (C1-C5) zum Überprüfen (T11-T12), ob das angeforderte Datenelement in modifizierter Form in dessen Cachespeicher (CM1-CM5) vorliegt,
(b2) Übertragen (T14-T25) des modifizierten Datenelements und des identifizierenden Etiketts von dem intervenierenden Prozessor (C3) an den intervenierenden Datenkanal (D3), und
(b3) Empfangen (T18-T25) des identifizierenden Etiketts von dem intervenierenden Datenkanal (D3) durch die Verbindungseinrichtung (125, Cm) zum Verbinden (T20-T27) des intervenierenden Datenkanals (D3) und des anfordernden Datenkanals (D1).

3. Verfahren (T1-T27) gemäß Anspruch 2, bei dem die Verbindungseinrichtung (125, Cm) eine Mehrzahl von Eingabepuffern (Bin1-Bin5) umfaßt, wobei jeder mit einem entsprechenden Datenkanal (D1-D5) verbunden ist, wobei das Verfahren (T1-T27) nach dem Schritt (b3), ferner den Schritt (b4) des Übertragens (T19-T26) des modifizierten Datenelements von dem intervenierenden Datenkanal (D3) zu dem entsprechenden Eingabepuffer (Bin3) aufweist.

4. Verfahren (T1-T27) gemäß Anspruch 3, das ferner nach dem Schritt (b4) den Schritt (b5) des Übertragens (T20-T27) des modifizierten Datenelements direkt von dem Eingabepuffer (Bin3), der dem intervenierenden Datenkanal (D3) entspricht, zu dem anfordernden Datenkanal (D1) aufweist.

5. Verfahren (T1-T27) gemäß einem der Ansprüche 1 bis 4, bei dem der Schritt (c) den Schritt des Gewährens (T14) eines Zugriffs zu dem anfordernden Datenkanal (D1) für die Verbindungseinrichtung (126, Cm) aufweist, sofort nachdem sichergestellt wurde (T11), daß das angeforderte Datenelement in modifizierter Form in dem Cachespeicher (CM3) des intervenierenden Prozessors (C3) vorliegt.

6. Verfahren (T1-T27) gemäß einem der Ansprüche 1 bis 5, bei dem der Schritt (c) den Schritt des Gewährens (T14) eines Zugriffs zu dem anfordernden Datenkanal (D1) für die Verbindungseinrichtung (125, Cm) aufweist, nur wenn keine anderen Anforderungen nach Zugriff zu dem anfordernden Datenkanal (D1) vorliegen.

7. Verfahren (T1-T31) gemäß einem der Ansprüche 1 bis 6, das nach dem Schritt (c) und vor der Beendigung von Schritt (b) zusätzlich folgenden Schritt aufweist:
(d) Benachrichtigen (T16-T18) der Verbindungseinrichtung (125, Cm) über das Vorhandensein anderer Anforderungen nach einem Zugriff zu dem anfordernden Datenkanal (D1).

8. Verfahren (T1-T31) gemäß Anspruch 7, das nach dem Schritt (d) zusätzlich folgende Schritte aufweist:
(e) das Freigeben (T17) eines Zugriffs zu dem anfordernden Datenkanal (D1) durch die Verbindungseinrichtung (125, Cm),
(f) das Anfordern (T20-T22) eines Zugriffs zu dem anfordernden Datenkanal (D1) durch die Verbindungseinrichtung (125, Cm), wenn (T19) keine anderen Anforderungen nach einem Zugriff zu dem anfordernden Datenkanal (C1) mehr vorliegen.

9. Verfahren (T1-T27) gemäß Anspruch 3 oder 4, bei dem die Verbindungseinrichtungen (125, Cm) eine Mehrzahl von Ausgabepuffern (Bout1-Bout5) umfassen, wobei jeder derselben mit einem entsprechenden Datenkanal (D1-D5) verbunden ist, wobei das Verfahren nach dem Schritt (b4) zusätzlich den Schritt (b5') des Übertragens (T20-T28) des modifizierten Datenelements von dem Eingabepuffer (Bin3), der dem intervenierenden Datenkanal (D3) entspricht, zu dem Ausgabepuffer (Bout1) der dem anfordernden Datenkanal (D1) entspricht und nachfolgend (T24-T31) an den anfordernden Datenkanal (D1) aufweist.

10. Computersystem (100), das eine Mehrzahl von Prozessoren (C1-C5) und einen gemeinschaftlich verwendeten Speicher (115) aufweist, wobei zumindest einer der Prozessoren (C1-C5) einen Cachespeicher (CM1-CM5) zum Speichern entsprechender Daten des gemeinschaftlich verwendeten Speichers (115), eine Mehrzahl von Datenkanälen (C1-C5), wobei zumindest einer der Prozessoren (C1-C5) mit jedem derselben verbunden ist, eine Verbindungseinrichtung (125, Cm) zum selektiven Verbinden der Datenkanäle (D1-D5), Steuereinrichtung (120, Cm), die in einer Interventionssituation, in der ein anfordernder Prozessor (C1) das Lesen eines Datenelements aus dem gemeinschaftlich verwendeten Speicher (115) anfordert und das angeforderte Datenelement in modifizierter Form in dem Cachespeicher (CM3) eines intervenierenden Prozessors (C3) vorliegt, zum Übertragen des modifizierten Datenelements von dem intervenierenden Prozessor (C3) zu der Verbindungseinrichtung (125, Cm) und nachfolgend zu dem anfordernden Prozessor (C1) geeignet ist, **dadurch gekennzeichnet, daß**
in der Interventionssituation die Steuerungseinrichtung (120, Cm) ferner geeignet ist, einen Zugriff zu dem Datenkanal (D1), der dem anfordernden Prozessor (C1) entspricht, für die Verbindungseinrichtungen (125, Cm) zu gewähren (T14), bevor das modifizierte Datenelement in der Verbindungseinrichtung (125, Cm) verfügbar ist (T19).

## Revendications

1. Procédé (T1-T27) de transfert de données dans un système d'ordinateur (100) comprenant une pluralité de processeurs (C1-C5) ainsi qu'une mémoire partagée (115), au moins l'un des processeurs (C1-C5) comportant une mémoire cache (CM1-CM5) destinée à stocker les données correspondantes de la mémoire partagée (115), une pluralité de canaux de données (D1-D5), au moins l'un desdits processeurs (C1-C5) étant relié à chacun d'entre eux, et un moyen d'interconnexion (125, Cm) destiné à interconnecter de façon sélective les canaux de données (D1-D5), le procédé comprenant les étapes :
a) de demande (T1-T5) de la lecture d'un élément de données à partir de la mémoire partagée (115) par un processeur demandeur (C1),
b) dans le cas (T5-T12) où l'élément de données demandé est présent sous forme modifiée dans la mémoire cache (CM3) d'un processeur intermédiaire (C3), le transfert (T14-T26) de l'élément de données modifié à partir du processeur intermédiaire (C3) vers le moyen d'interconnexion (125, Cm) et par la suite (T20-T27) vers le processeur demandeur (C1),
**caractérisée par** l'étape
c) d'octroi (T14) au moyen d'interconnexion d'accès au canal de données (D1) correspondant au processeur demandeur (C1) avant que l'élément de données modifié soit disponible (T19) dans le moyen d'interconnexion (125, Cm).

2. Procédé (T1-T27) selon la revendication 1, dans lequel le système d'ordinateur (100) inclut un bus d'adresse (105) auquel sont reliés les processeurs (C1-C5), l'étape (a) comprenant l'étape
(a1) d'envoi (T4-T5) au bus d'adresse (105) par le processeur demandeur (C1) d'une valeur (ADD) contenant une adresse de l'élément de données demandé et une étiquette d'identification du processeur demandeur (C1),
et l'étape (b) comprenant les étapes
(b1) de surveillance (T5) par chacun desdits processeurs (C1-C5) du contenu du bus d'adresse (105) de sorte à vérifier (T11-T12) si l'élément de données demandé est présent sous forme modifiée dans sa mémoire cache (CM1-CM5),
(b2) de transfert (T14-T25) de l'élément de données modifié ainsi que de l'étiquette d'identification à partir du processeur intervenant (C3) vers le canal de données intervenant (D3), et
(b3) de réception (T18-T25) par le moyen d'interconnexion (125, Cm) de l'étiquette d'identification à partir du canal de données intervenant (D3) afin d'interconnecter (T20-T27) le canal de données intervenant (D3) et le canal de données demandeur (D1).

3. Procédé (T1-T27) selon la revendication 2, dans lequel le moyen d'interconnexion (125, Cm) inclut une pluralité de tampons d'entrée (Bin1-Bin5), chacun étant relié au canal (D1-D5) de données correspondant, le procédé (T1-T27) comprenant de plus après l'étape (b3) l'étape (b4) de transfert (T19-T26) de l'élément de données modifié à partir du canal de données intervenant (D3) au tampon d'entrée (Bin3) correspondant.

4. Procédé (T1-T27) selon la revendication 3, comprenant de plus après l'étape (b4) l'étape (b5) de transfert (T20-T27) de l'élément de données modifié directement à partir du tampon d'entrée (Bin3) correspondant au canal de données intervenant (D3) vers le canal de données demandeur (D1).

5. Procédé (T1-T27) selon l'une quelconque des revendications 1 à 4, dans lequel l'étape (c) inclut l'étape d'octroi d'accès (T14) pour le moyen d'interconnexion (125, Cm) au canal (D1) de données faisant la demande immédiatement après qu'il soit certain (T11) que l'élément de données demandé soit présent sous forme modifiée dans la mémoire cache (CM3) du processeur intermédiaire (C3).

6. Procédé (T1-T27) selon l'une quelconque des Revendications 1 à 5, dans lequel l'étape (c) inclut l'étape d'octroi d'accès (T14) au moyen d'interconnexion (125, Cm) au canal de données demandeur (D1) uniquement lorsqu'il n'y a pas d'autre demande d'accès au canal de données demandeur (D1).

7. Procédé (T1-T31) selon l'une quelconque des Revendications 1 à 6, comprenant de façon additionnelle après l'étape (c) et avant la fin de l'étape (b) l'étape :
(d) de notification (T16-T18) au moyen d'interconnexion (125, Cm) de la présence d'autres demandes d'accès au canal de données demandeur (D1).

8. Procédé (T1-T31) selon la revendication 7, comprenant de façon additionnelle après l'étape (d) les étapes :
(e) de libération (T17) par le moyen d'interconnexion (125, Cm) de l'accès au canal de données demandeur (D1),
(f) de demande (T20-T22) par le moyen d'interconnexion (125, Cm) d'accès au canal de données demandeur (D1) lorsque (T19) il n'y a plus d'autres demandes d'accès au canal de données demandeur (C1).

9. Procédé (T1-T27) selon les revendications 3 ou 4, dans lequel le moyen d'interconnexion (125, Cm) inclut une pluralité de tampons de sortie (Bout1-Bout5), chacun étant relié à un canal (D1-D5) de données correspondant, le procédé comprenant de façon additionnelle après l'étape (b4) l'étape (b5') de transfert (T20-T28) de l'élément de données modifié à partir du tampon d'entrée (Bin3) correspondant au canal (D3) de données intermédiaire vers le tampon (Bout1) de sortie correspondant au canal (D1) de données faisant la demande et par la suite (T24-T31) au canal (D1) de données faisant la demande.

10. Système d'ordinateur (100) comprenant une pluralité de processeurs (C1-C5) ainsi qu'une mémoire partagée (115), au moins l'un des processeurs (C1-C5) ayant une mémoire cache (CM1-CM5) destinée à stocker les données correspondantes de la mémoire partagée (115), une pluralité de canaux (D1-D5) de données au moins l'un desdits processeurs (C1-C5) étant relié à chacun d'entre eux, un moyen d'interconnexion (125, Cm) destiné à interconnecter de façon sélective les canaux de données (D1-D5), un moyen de commande (120, Cm) apte, dans une situation d'intervention dans laquelle un processeur demandeur (C1) effectue la demande de lecture d'un élément de données à partir de la mémoire partagée (115) et l'élément de données demandé est présent sous forme modifiée dans la mémoire cache (CM3) d'un processeur (C3) intermédiaire, à transférer l'élément de données modifié à partir du processeur (C3) intermédiaire vers le moyen d'interconnexion (125, Cm) et par la suite vers le processeur demandeur (C1),
**caractérisé en ce que**
dans une situation d'intervention le moyen de commande (120, Cm) est de plus apte à octroyer (T14) au moyen d'interconnexion (125, Cm) l'accès au canal (D1) de données correspondant au processeur demandeur (C1) avant que l'élément de données modifié soit disponible (T19) dans le moyen d'interconnexion (125, Cm).
